# EUROPEAN PATENT SPECIFICATION

(11) **EP 1 123 904 B1**
(45) Date of publication and mention of the grant of the patent: **24.09.2003**
(21) Application number: 00102660.8
(22) Date of filing: 08.02.2000
(51) Int. Cl.: C03C 8/22

(54) **Enamel for use on cast iron**
Email für Anwendung auf Guseisen
Email pour l'utilisation sur la fonte de fer

(43) Date of publication of application: 16.08.2001
(73) Proprietor: Ferro France S.A.R.L., 52115 Saint Dizier Cedex (FR)
(72) Inventor: Marinho, Emmanuel, 52100 Saint-Dizier (FR)
(74) Representative: Reinhardt, Markus, Dipl.-Ing.

(56) References cited:
- EP-A- 0 358 933
- EP-A- 0 453 897
- DE-A- 4 200 237
- DE-A- 19 654 077
- DATABASE WPI Section Ch, Week 198816 Derwent Publications Ltd., London, GB; Class L01, AN 1988-106079 XP002142583 & DD 251 743 A (WENZEL E), 25 November 1987 (1987-11-25)

## Description

### Field of Invention

The present invention relates to a composition for use in forming an enamel coating on cast iron. More particularly, the present invention relates to a composition for use in forming an acid and thermal shock resistant enamel coating having a matte finish on cast iron by dry electrostatic spraying using a one-coat one-fire process.

### Background of the Invention

The application of enamel-forming compositions to metal surfaces by dry electrostatic spraying is well known in the art and is described, for example, in Snow, U.S. Pat. 3,928,668. In accordance with this method, dry-milled enamel-forming powders are coated with a suitable agent to impart high resistivity, suspended in a fluidized bed, and delivered to a spray gun that imparts a negative electric charge to each particle. The metal article to be coated, which, if cast iron, has been pickled (acid etched and nickel coated) and/or coated with an adherent enamel ground coat, is at ground potential. The resistivity under ambient humidity conditions controls the rate of charge decay and therefore the adherence of the enamel-forming powders to the metal substrate. The coating thickness is self-limiting and thus thickness uniformity is excellent, even on curved surfaces. The coated metal article is typically fired for about 3 to 6 minutes at 750-850°C to fuse and adhere the enamel coating to the metal substrate.

Rion, U.S. Pat. 4,110,487, describes a process by which cleaned-only-metal surfaces, including cast iron, can be enameled via a two-coat one-fire dry electrostatic spraying process. In accordance with this method, two layers of essentially dry frit compositions are applied to a metal substrate by dry electrostatic spraying and then fired only once to form a dual coat coherent ceramic layer. The first layer, which promotes adhesion of the enamel coating to the metal substrate, fuses and stabilizes during the firing operation at temperatures below that at which the second layer, which promotes good acid and thermal shock resistance, fuses and stabilizes.

Schittenhelm et al., U.S. Pat. 5,075,263, describes a composition for use in forming an enamel coating on metal surfaces, particularly pickled steel, by dry electrostatic spraying using a one-coat one-fire process. This composition, which is not recommended for application to non-ground coated cleaned-only-metal, produces an enamel coating having good acid and thermal shock resistance and a relatively glossy finish. While a relatively glossy enamel coating may be desired for some applications, enamel coatings having good acid and thermal shock resistance and a matte finish (i.e., non-glossy) are particularly desired for other applications, such as, for example, on cookware and stove tops. Prior attempts to develop a composition for use in forming an acid and thermal shock resistant enamel coating having a matte finish on non-ground coated cleaned-only-metal surfaces, particularly cast iron, by dry electrostatic spraying using a one-coat one-fire process have been unsuccessful.

### Summary of the Invention

The present invention provides a composition for use in forming an acid and thermal shock resistant enamel coating having a matte finish on cast iron by dry electrostatic spraying using a one-coat one-fire process. The composition according to the present invention comprises at least about 89% by weight of a glass component. The glass component comprises from 45% to 55% by weight of a first glass frit that promotes chemical and thermal resistance, from 15% to 30% by weight of a second glass frit that promotes metal out gassing, and from 30% to 35% of a third glass frit that promotes bonding of the enamel coating to cast iron. The composition can also optionally comprise up to about 5% by weight of inorganic pigments and up to about 6% of inert substances.

The first glass frit comprises from 48% to 56% by weight SiO₂, from 13% to 17% by weight B₂O₃, from 7% to 11% by weight Na₂O, from 3% to 6% by weight CaO, from 3% to 6% by weight BaO, from 1% to 3% by weight CoO, from 1% to 3% by weight NiO, from 1% to 3% by weight MoO₃, from 0% to 4% by weight Li₂O, from 0% to 4% by weight K₂O, from 0% to 3% by weight Sb₂O₃, from 0% to 3% by weight TiO₂, from 0% to 2% by weight MgO, and from 0% to 2% by weight Fe₂O₃. The second glass frit comprises from 37% to 45% by weight SiO₂, from 20% to 30% by weight ZrO₂, from 9% to 13% by weight B₂O₃, from 5% to 9% by weight Na₂O, from 2% to 5% by weight CaO, from 2% to 4% by weight MgO, from 1% to 5% by weight K₂O, from 1% to 4% by weight Al₂O₃, from % to 4% by weight TiO₂, from 1% to 3% by weight CoO, and from 0% to 4% by weight Li₂O. The composition of the third glass frit is not per se critical, and any of the known bonding frits for use on cast iron, which are widely available, can be successfully used as the third glass frit in the invention.

The composition according to the present invention is preferably applied by dry electrostatic spraying directly onto non-pickled cast iron articles such as pots, pans, pan supports, and stoves which have been grit blasted prior to enameling. Upon firing, the composition forms an enamel coating having a matte finish that exhibits good acid and thermal shock resistance. Various colors, such as black, brown, blue, and green, can be obtained by varying the amount of inorganic pigments in the composition and/or by adjusting the amount of coloring oxides in the glass frits.

The foregoing and other features of the invention are hereinafter more fully described and particularly pointed out in the claims, the following description setting forth in detail certain illustrative embodiments of the invention, these being indicative, however, of but a few of the various ways in which the principles of the present invention may be employed.

### Detailed Description

The composition of the present invention is suitable for use on many types of cast-iron articles, such as, for example, pan supports, pots, pans, and stove tops, where an acid and thermal shock resistant enamel coating having a matte finish is desired. As used in the specification and in the accompanying claims, the term "cast-iron" means metals that are alloys of carbon (containing up to about 4.2% by weight) and silicon (containing up to about 3.5% by weight) with iron, and which may or may not contain other elements such as aluminum, cerium, chromium, copper, nickel, magnesium, manganese, molybdenum, phosphorous, sulphur, titanium, and vanadium.

Relatively large amounts of carbon-bearing gases are typically generated during the enameling of cast-iron due to the relatively high carbon content of the metal. The generation of relatively large amounts of carbon-bearing gases can result in problematic heavy bubbling of enamel coatings during firing. In order to overcome this problem, cast-iron is conventionally enameled in two layers. The first layer is a special ground coat that allows the cast-iron to degas. The second layer is an enamel cover coat layer that is applied to the ground coated surface and fired. The composition according to the present invention permits cast iron to be enameled in only one layer. It permits the carbon-bearing gases to diffuse through the enamel layer without affecting the appearance of the finished enamel.

The composition of the present invention comprises at least about 89% by weight, and preferably at least about 95% by weight, of a glass component. The glass component comprises a blend of from 45% to 55% by weight of a first glass frit that promotes chemical and thermal resistance, from 15% to 30% by weight of a second glass frit that promotes metal out gassing, and from 30% to 35% of a third glass frit that promotes bonding of the enamel coating to cast iron. In addition to the glass component, the composition may optionally comprise up to about 5% by weight of inorganic pigments and up to about 6% by weight of inert substances. Since the composition according to the present invention is applied using a dry electrostatic spray technique, it will be appreciated by those skilled in the art that the composition also preferably comprises from 0.15% to 0.25% by weight of one or more conventional organopolysiloxanes, which are well known. The specifications of Snow, U.S. Pat. 3,928,668, and Rion, U.S. Pat. 4,110,487, include teachings regarding the use of organopolysiloxanes and the dry electrostatic deposition of ceramic powders.

The first glass frit provides a composition, in weight percent, as follows:

| Oxide | Maximum Range | Preferred Range | Optimum |
|---|---|---|---|
| SiO₂ | 48-56 | 49.6-54.8 | 52.2 ± 1.6 |
| B₂O₃ | 13-17 | 13.0-15.7 | 14.3 ± 0.9 |
| Na₂O | 7-11 | 7.0-9.4 | 7.9 ± 0.7 |
| CaO | 3-6 | 4.4-6.0 | 5.2 ± 0.4 |
| BaO | 3-6 | 4.8-6.0 | 5.7 ± 0.4 |
| CoO | 1-3 | 0.8-1.6 | 1.2 ± 0.2 |
| NiO | 1-3 | 1.7-2.5 | 2.1 ± 0.3 |
| MoO₃ | 1-3 | 1.1-1.6 | 1.4 ± 0.1 |
| Li₂O | 0-4 | 0.9-1.7 | 1.3 ± 0.2 |
| K₂O | 0-4 | 0.6-1.2 | 0.9 ± 0.1 |
| Sb₂O₃ | 0-3 | 0.2-0.3 | 0.3 ± 0.1 |
| TiO₂ | 0-3 | 1.5-2.3 | 1.9 ± 0.2 |
| MgO | 0-2 | 1.2-1.8 | 1.5 ± 0.1 |
| Fe₂O₃ | 0-2 | 1.0-1.8 | 1.4 ± 0.2 |
| F | 0-3 | 0-1.0 | 0.3 ± 0.2 |

The first glass frit may be prepared utilizing conventional glass melting techniques. A conventional ceramic refractory, fused silica, or platinum crucible may be used to prepare the first glass frit. Typically, selected oxides are smelted at around 1280 ± 50°C for about 30 minutes. The molten glass formed in the crucible is then converted to frit by water quenching or using water-cooled rollers. It will be appreciated that production of the first glass frit is conventional, and any of the various techniques well-known to those skilled in the art can be employed.

The second glass frit provides a composition as follows:

| Oxide | Maximum Range | Preferred Range | Optimum |
|---|---|---|---|
| SiO₂ | 37-45 | 40.7-45.0 | 42.9 ± 1.3 |
| ZrO₂ | 20-30 | 22.9-28.0 | 25.4 ± 0.8 |
| B₂O₃ | 9-13 | 9.0-10.6 | 9.6 ± 0.4 |
| Na₂O | 5-9 | 5.0-6.7 | 5.2 ± 0.2 |
| CaO | 2-5 | 2.8-3.8 | 3.3 ± 0.3 |
| MgO | 2-4 | 2.4-3.6 | 3.0 ± 0.3 |
| K₂O | 1-5 | 1.7-3.2 | 2.5 ± 0.4 |
| Al₂O₃ | 1-4 | 2.5-3.8 | 3.2 ± 0.3 |
| TiO₂ | 1-4 | 2.1-3.1 | 2.6 ± 0.3 |
| CoO | 1-3 | 1.4-2.6 | 2.0 ± 0.3 |
| Li₂O | 0-4 | 0.3-0.5 | 0.4 ± 0.1 |
| F | 0-5 | 2.3-4.2 | 3.2 ± 0.3 |

The second glass frit may be prepared utilizing conventional glass melting techniques provided that the atmosphere during smelting is carefully controlled such that the volume of O_{2(g)} present divided by the total volume of all other gases present is kept within the range of about 1.7 to 2.2. A conventional ceramic refractory, fused silica, or platinum crucible may be used to prepare the glass frit. Typically, selected oxides are smelted at a temperature of greater than about 1400°C for about 30 minutes. The molten glass formed in the crucible is then converted to frit by water quenching or using water-cooled rollers. It will be appreciated that aside from maintaining a carefully controlled atmosphere in the smelter, production of the second glass frit is conventional, and any of the various techniques well-known to those skilled in the art can be employed.

The third glass frit may be selected from any of the conventional bonding frits for use on cast iron which are well known in the art. In other words, the composition of the third glass frit is not per se critical and any of the numerous commercially available bonding frits can be used. One such bonding frit, which is available from Ferro Corporation of Cleveland, Ohio USA as 002-71-2510, provides a composition as follows:

| Oxide | Maximum Range | Preferred Range | Optimum |
|---|---|---|---|
| SiO₂ | 45-54 | 48.0-53.1 | 50.6 ± 2.1 |
| B₂O₃ | 12-16 | 14.4-16.0 | 15.5 ± 0.4 |
| Na₂O | 9-13 | 9.0-10.9 | 9.8 ± 0.7 |
| K₂O | 2-6 | 3.6-4.9 | 4.3 ± 0.5 |
| CaO | 2-5 | 2.0-2.8 | 2.3 ± 0.2 |
| TiO₂ | 2-5 | 3.1-4.7 | 3.9 ± 0.5 |
| BaO | 1-4 | 1.7-2.5 | 2.1 ± 0.3 |
| Fe₂O₃ | 1-4 | 1.8-3.3 | 2.5 ± 0.5 |
| CoO | 1-3 | 1.0-1.4 | 1.1 ± 0.1 |
| NiO | 0.5-3 | 0.5-0.7 | 0.6 ± 0.1 |
| MnO₂ | 0-5 | 3.8-5.0 | 4.7 ± 0.2 |
| Li₂O | 0-4 | 1.3-2.4 | 1.8 ± 0.3 |
| Al₂0₃ | 0-3 | 0-0.5 | 0.3 ± 0.1 |
| F | 0-4 | 1.1-2.1 | 1.6 ± 0.3 |

The third glass frit may be prepared utilizing conventional glass melting techniques. A conventional ceramic refractory, fused silica, or platinum crucible may be used to prepare the glass frit. Typically, selected oxides are smelted at around 1360 ± 50°C for about 30 minutes. The molten glass formed in the crucible is then converted to frit by water quenching or using water-cooled rollers. It will be appreciated that production of the third glass frit is conventional, and any of the various techniques well-known to those skilled in the art can be employed.

To prepare the composition for use in dry electrostatic spraying, the first glass frit, second glass frit, third glass frit, one or more organopolysiloxanes, and optional inorganic pigments and inert substances are milled together in a ball mill to a fineness of 11 ± 0.5% residue on a 325 mesh sieve as determined using ASTM Standard C285-88. The resulting powder will have a bulk resistivity of about 5 x 10¹⁵ ohm/cm to about 80 x 10¹⁵ ohm/cm.

After milling, the composition can be applied to a grit-blasted cleaned-only cast iron substrate by dry electrostatic spraying using conventional electrostatic spray equipment, such as, for example, a standard corona discharge gun at 50Kv to 100Kv, which is well known in the art. The typical application weight ranges from about 200 g/m² to about 500 g/m². A typical firing last for about 4 to about 10 minutes at a temperature ranging from about 780°C to about 820°C. It will be appreciated that firing time is not per se critical, and a longer or shorter firing time can be used. After firing, the composition forms an adherent enamel coating having a thickness of from about 50 *µ*m to about 180 um.

A wide range of colors, including various shades of black, brown, blue, and green, can be obtained in the resulting enamel coating by adjusting the amount of coloring oxides present in the glass frits and/or by adding up to about 5% by weight of inorganic pigments. Typical coloring oxides known in the art include, for example, CoO, Cr₂O₃, Fe₂O₃, MnO₂, and NiO. It will be appreciated that these coloring oxides and other oxides can be introduced at low percentages, preferably less than about 1% by weight, into each of the glass frits previously described without affecting the results obtained from the final enamel coating. Thus, unless otherwise previously stated to be present in the frits in greater quantities, small amounts, preferably less than about 1% by weight, of one or more of the following oxides could be included as part of one or more of the glass frits used in the composition: Al₂O₃, BaO, CeO₂, CoO, Cr₂O₃, CuO, Fe₂O₃, MnO₂, MoO₃, NiO, Sb₂O₃, SrO, ZnO, and ZrO₂.

The composition according to the present invention produces an enamel coating having a matte finish. The specular gloss of an enamel coating formed by firing the composition according to the present invention is from about 4 to about 8 as measured according to ASTM Standard D523-89 (1994)e1 with a glossmeter geometry of 85°. Other fired properties of the composition include: a thermal expansion coefficient of about 260 x 10⁻⁷ m/°C to about 290 x 10⁻⁷ m/°C.; an acid resistance value of A to AA as measured according to ASTM Standard C-282-99; and a thermal shock resistance of greater than about 425°C as measured according to ASTM Standard C385-58(1998).

The following examples are intended only to illustrate the invention and should not be construed as imposing limitations upon the claims:

### Example

Glass Frit A was prepared by smelting selected oxides at around 1280°C for about 30 minutes using a conventional ceramic refractory crucible and then converting the molten glass by water quenching into a frit having the following composition:

| Oxide | Wt. % |
|---|---|
| SiO₂ | 53.2 |
| B₂O₃ | 14.7 |
| Na₂O | 8.4 |
| CaO | 5.4 |
| BaO | 5.9 |
| CoO | 1.2 |
| NiO | 2.2 |
| MoO₃ | 1.4 |
| Li₂O | 1.3 |
| K₂O | 0.9 |
| Sb₂O₃ | 0.3 |
| TiO₂ | 1.9 |
| MgO | 1.5 |
| Fe₂O₃ | 1.4 |
| F | 0.3 |

Glass Frit B was prepared in a controlled atmosphere (the ratio of the volume of O_{2(g)} present divided by the total volume of all other gases present was kept at about 2.0) by smelting selected oxides at around 1400°C for about 30 minutes using a conventional ceramic refractory crucible and then converting the molten glass by water quenching into a frit having the following composition:

| Oxide | Wt. % |
|---|---|
| SiO₂ | 41.9 |
| ZrO₂ | 24.8 |
| B₂O₃ | 9.4 |
| Na₂O | 5.1 |
| CaO | 3.1 |
| MgO | 2.8 |
| K₂O | 2.3 |
| Al₂O₃ | 3.0 |
| TiO₂ | 2.4 |
| CoO | 1.8 |
| Li₂O | 0.4 |
| F | 3.0 |

Glass Frit C was prepared by smelting selected oxides at around 1360°C for about 30 minutes using a conventional ceramic refractory crucible and then converting the molten glass by water quenching into a frit having the following composition:

| Oxide | Wt. % |
|---|---|
| SiO₂ | 50.3 |
| B₂O₃ | 15.5 |
| Na₂O | 9.6 |
| K₂O | 4.1 |
| CaO | 2.3 |
| TiO₂ | 3.7 |
| BaO | 2.1 |
| Fe₂O₃ | 2.3 |
| CoO | 1.1 |
| NiO | 0.6 |
| MnO₂ | 4.7 |
| Li₂O | 1.8 |
| Al₂O₃ | 0.3 |
| F | 1.6 |

An enamel composition was prepared by ball milling the following constituents to a fineness of 10% being retained through a 45 um sieve:

| Constituent | Parts (by weight) |
|---|---|
| Glass Frit A | 47.9 |
| Glass Frit B | 20.9 |
| Glass Frit C | 31.2 |
| LITOFLUX¹ | 5 |
| FK3001² | 2 |
| DC1107³ | 0.2 |

| | |
|---|---|
| ¹ - LITOFLUX is a tradename for an inorganic filler available from Bat-co Spa of Sassuolo (Mo) ITALY. | |
| ² - FK3001 is a tradename for a black pigment available from Ferro Corporation of Cleveland, Ohio. | |
| ³- DC1107 is a tradename for an organopolysiloxane available from Dow Corning of USA. | |

After milling, the enamel composition was applied to a cast-iron pan support grid used as a cover for gas cooker hob burners. The pan support used was about 25 cm by 20 cm with about a 1 cm² cross section. It was sprayed using a VERSA-SPRAY II model corona discharge gun manufactured by Nordson Corporation of Cleveland, Ohio at about 70kV to obtain a coverage of about 300 g/m². The coated cast iron pan support was then fired at about 780°C for about 8 minutes in a box oven. The finished enamel coated pan support displayed a specular gloss of 5 as measured according to ASTM Standard D523-89 (1994)e1 with a glossmeter geometry of 85°, a thermal shock resistance of greater than about 425°C as measured according to ASTM Standard C385-58(1998), and an acid resistance value of AA as measured according to ASTM Standard C-282-99.

## Claims

1. A composition for use in forming an enamel coating on cast iron by dry electrostatic spraying using a one-coat one-fire process comprising at least about 89% by weight of a glass component, said glass component comprising a blend of from 45% to 55% by weight of a first glass frit, from 15% to 30% by weight of a second glass frit, and from 30% to 35% of a third glass frit, said first glass frit comprising from 48% to 56% by weight SiO₂, from 13% to 17% by weight B₂O₃, from 7% to 11% by weight Na₂O, from 3% to 6% by weight CaO, from 3% to 6% by weight BaO, from 1% to 3% by weight CoO, from 1% to 3% by weight NiO, from 1% to 3% by weight MoO_{3,} from 0% to 4% by weight Li₂O, from 0% to 4% by weight K₂O, from 0% to 3% by weight Sb₂O₃, from about 0% to 3% by weight TiO₂, from 0% to 2% by weight MgO, and from about 0% to about 2% by weight Fe₂O₃, said second glass frit comprising from 37% to 45% by weight SiO₂, from 20% to 30% by weight ZrO₂, from 9% to 13% by weight B₂O₃, from 5% to 9% by weight Na₂O, from 2% to 5% by weight CaO, from 2% to 4% by weight MgO, from 1 % to 5% by weight K₂O, from 1 % to 4% by weight Al₂O₃, from 1% to 4% by weight TiO_{2,} from 1% to 3% by weight CoO, and from 0% to 4% by weight Li₂O, and said third glass frit comprising a bonding frit for use on cast iron.

2. The composition as in claim 1 wherein said third glass frit comprises a bonding frit comprising from 45% to 54% by weight SiO₂, from 12% to 16% by weight B₂O₃, from 9% to 13% by weight Na₂O, from 2% to 6% by weight K₂O, from 2% to 5% by weight CaO, from 2% to 5% by weight TiO₂, from 1% to 4% by weight BaO, from 1% to 4% by weight Fe₂O_{3,} from 1% to 3% by weight CoO, from 0.5% to 3% by weight NiO, from 0% to 5% by weight MnO₂, from 0% to 4% by weight Li₂O, and from 0% to 3% by weight Al₂O₃.

3. The composition as in claim 1 further comprising from 0% to 5% by weight of inorganic pigments.

4. The composition as in claim 3 wherein said inorganic pigments comprises one or more pigments selected from the group consisting of Cr₂0₃, CoO, Fe₂O₃, MnO2, and NiO.

5. The composition as in claim 1 wherein said first glass frit further comprises from 0% to 1% by weight of Al₂O₃, from 0% to 1% by weight of CeO₂, from 0% to 1% by weight of CuO, from 0% to 1% by weight of MnO₂, from 0% to 1% by weight SrO, from 0% to 1% by weight ZnO, and from 0% to 1% by weight of ZrO₂, and said second glass frit further comprises from 0% to 1% by weight of BaO, from 0% to 1% by weight of CeO₂, from 0% to 1% by weight of CuO, from 0% to 1% by weight of Fe₂O₃, from 0% to 1% by weight of MnO₂, from 0% to 1% by weight of MoO₃, from 0% to 1% by weight of NiO, from 0% to 1% by weight of Sb₂O₃, from 0% to 1% by weight SrO, and from 0% to 1% by weight ZnO.

6. The composition as in claim 2 wherein said third glass frit further comprises from 0% to 1% by weight of CeO₂, from 0% to 1% by weight of CuO, from 0% to 1% by weight of MoO₃, from 0% to 1% by weight of Sb₂O₃, from 0% to 1% by weight SrO, from 0% to 1% by weight ZnO, and from 0% to 1% by weight of ZrO₂.

7. The composition as in claim 1 wherein upon being applied to a cast iron surface by dry electrostatic spraying and fired for 4 to 10 minutes at a temperature ranging from 780°C to 820°C forms an enamel coating having a specular gloss of 4 to 8 as measured according to ASTM Standard D523-89 (1994)e1 with a glossmeter geometry of 85°, a thermal shock resistance of greater than about 425°C as measured according to ASTM Standard C385-58(1998), and an acid resistance value of A to AA as measured according to ASTM Standard C-282-99.

## Patentansprüche

1. Zusammensetzung für die Verwendung bei der Bildung einer Emaillebeschichtung auf Gußeisen durch elektrostatisches Trockensprühen unter Verwendung eines Einschicht-Einbrennverfahrens, umfassend wenigstens etwa 89 Gew.-% eines Glasbestandteils, wobei der Glasbestandteil eine Mischung von 45 Gew.-% bis 55 Gew.-% einer ersten Glasfritte, von 15 Gew.-% bis 30 Gew.-% einer zweiten Glasfritte, und von 30 Gew.-% bis 35 Gew.-% einer dritten Glasfritte umfasst, wobei die erste Glasfritte von 48 Gew.-% bis 56 Gew.-% Si0₂, von 13 Gew.-% bis 17 Gew.-% B₂O₃, von 7 Gew.-% bis 11 Gew.-% Na₂0, von 3 Gew.-% bis 6 Gew.-% CaO, von 3 Gew.-% bis 6 Gew.-% BaO, von 1 Gew.-% bis 3 Gew.-% CoO, von 1 Gew.-% bis 3 Gew.-% NiO, von 1 Gew.-% bis 3 Gew.-% MoO₃, von 0 Gew.-% bis 4 Gew.-% Li₂O, von 0 Gew.-% bis 4 Gew.-% K₂O, von 0 Gew.-% bis 3 Gew.-% Sb₂O₃, von 0 Gew.-% bis 3 Gew.-% TiO₂, von 0 Gew.-% bis 2 Gew.-% MgO, und von 0 Gew.-% bis 2 Gew.-% Fe₂O₃ umfasst, wobei die zweite Glasfritte von 37 Gew.-% bis 45 Gew.-% Si0₂, von 20 Gew.-% bis 30 Gew.-% ZrO₂, von 9 Gew.-% bis 13 Gew.-% B₂O₃, von 5 Gew.-% bis 9 Gew.-% Na₂0, von 2 Gew.-% bis 5 Gew.-% CaO, von 2 Gew.-% bis 4 Gew.-% MgO, von 1 Gew.-% bis 5 Gew.-% K₂O. von 1 Gew.-% bis 4 Gew.-% Al₂O₃. von 1 Gew.-% bis 4 Gew.-% TiO₂, von 1 Gew.-% bis 3 Gew.-% CoO und von 0 Gew.-% bis 4 Gew.-% Li₂O umfasst und die dritte Glasfritte eine Bindefritte für die Verwendung auf Gußeisen umfasst.

2. Zusammensetzung nach Anspruch 1, wobei die dritte Glasfritte eine Bindefritte umfasst, die von 45 Gew.-% bis 54 Gew.-% SiO₂, von 12 Gew.-% bis 16 Gew.-% B₂O₃, von 9 Gew.-% bis 13 Gew.-% Na₂O, von 2 Gew.-% bis 6 Gew.-% K₂O, von 2 Gew.-% bis 5 Gew.-% CaO, von 2 Gew.-% bis 5 Gew.-% TiO₂, von 1 Gew.-% bis 4 Gew.-% BaO, von 1 Gew.-% bis 4 Gew.-% Fe₂O₃, von 1 Gew.-% bis 3 Gew.-% CoO, von 0,5 Gew.-% bis 3 Gew.-% NiO, von 0 Gew.-% bis 5 Gew.-% MnO₂, von 0 Gew.-% bis 4 Gew.-% Li₂O und von 0 Gew.-% bis 3 Gew.-% Al₂O₃ umfasst.

3. Zusammensetzung nach Anspruch 1, die weiter von 0 Gew.-% bis 5 Gew.-% anorganische Pigmente umfasst.

4. Zusammensetzung nach Anspruch 3, wobei die anorganischen Pigmente ein oder mehrere Pigmente, ausgewählt aus der Gruppe, bestehend aus Cr₂O₃, CoO, Fe₂O₃, MnO₂ und NiO, umfassen.

5. Zusammensetzung nach Anspruch 1, wobei die erste Glasfritte weiter von 0 Gew.-% bis 1 Gew.-% Al₂O₃, von 0 Gew.-% bis 1 Gew.-% CeO₂, von 0 Gew.-% bis 1 Gew.-% CuO, von 0 Gew.-% bis 1 Gew.-% Mn0₂, von 0 Gew.-% bis 1 Gew.-% SrO, von 0 Gew.-% bis 1 Gew.-% ZnO und von 0 Gew.-% bis 1 Gew.-% ZrO₂ umfasst und die zweite Glasfritte weiter von 0 Gew.-% bis 1 Gew.-% BaO, von 0 Gew.-% bis 1 Gew.-% CeO₂, von 0 Gew.-% bis 1 Gew.-% CuO, von 0 Gew.-% bis 1 Gew.-% Fe₂O₃, von 0 Gew.-% bis 1 Gew.-% MnO₂, von 0 Gew.-% bis 1 Gew.-% MoO₃, von 0 Gew.-% bis 1 Gew.-% NiO, von 0 Gew.-% bis 1 Gew.-% Sb₂O₃, von 0 Gew.-% bis 1 Gew.-% SrO und von 0 Gew.-% bis 1 Gew.-% ZnO umfasst.

6. Zusammensetzung nach Anspruch 2, wobei die dritte Glasfritte weiter von 0 Gew.-% bis 1 Gew.-% CeO₂, von 0 Gew.-% bis 1 Gew.-% CuO, von 0 Gew.-% bis 1 Gew.-% MoO₃, von 0 Gew.-% bis 1 Gew.-% Sb₂O₃, von 0 Gew.-% bis 1 Gew.-% SrO, von 0 Gew.-% bis 1 Gew.-% ZnO und von 0 Gew.-% bis 1 Gew.-% ZrO₂ umfasst.

7. Zusammensetzung nach Anspruch 1, wobei beim Auftragen auf eine Gußeisenoberfläche durch elektrostatisches Trockensprühen und Brennen von 4 bis 10 Minuten bei einer Temperatur im Bereich von 780 °C bis 820 °C eine Emaillebeschichtung mit einem spiegelartigen Glanz von 4 bis 8 gemäß dem ASTM-Standard D523-89 (1994) e1, gemessen mit einem Glanzmesser unter einem Winkel von 85°, einer thermischen Stoßfestigkeit von größer als etwa 425 °C, gemessen gemäß ASTM-Standard C385-58(1998), und einem Säurefestigkeitswert von A bis AA, gemessen gemäß dem ASTM Standard C-282-99, gebildet wird.

## Revendications

1. Composition pour l'emploi dans la formation d'une couche d'émail sur fonte de fer, par électrospray à sec utilisant un procédé une couche-une cuisson, comprenant approximativement au moins 89 % en poids d'un composant de verre, ledit composant de verre comprenant un mélange de 45 % à 55 % en poids d'une première fritte de verre, de 15 % à 30 % en poids d'une seconde fritte de verre, et de 30 % à 35 % en poids d'une troisième fritte de verre, ladite première fritte de verre comprenant de 48 % à 56 % en poids de SiO₂, de 13 % à 17 % en poids de B₂O₃, de 7 % à 11 % en poids de Na₂0, de 3 % à 6 % en poids de CaO, de 3 % à 6 % en poids de BaO, de 1 % à 3 % en poids de CoO, de 1 % à 3 % en poids de NiO, de 1 % à 3 % en poids de MoO₃, de 0 % à 4 % en poids de Li₂O, de 0 % à 4 % en poids de K₂O, de 0 % à 3 % en poids de Sb₂O₃, de 0 % à 3 % en poids TiO₂, de 0 % à 2 % en poids de MgO, et de 0 % à 2 % en poids de Fe₂O₃, la dite seconde fritte de verre comprenant de 37 % à 45 % en poids de SiO₂, de 20 % à 30 % en poids de ZrO₂, de 9 % à 13 % en poids de B₂O₃, de 5 % à 9 % en poids de Na₂O, de 2 % à 5 % en poids de CaO, de 2 % à 4 % en poids de MgO, de 1 % à 5 % en poids de K₂O, de 1 % à 4 % en poids de Al₂O₃, de 1 % à 4 % en poids de TiO₂, de 1 % à 3 % en poids de CoO et de 0 % à 4 % en poids de Li₂O et ladite troisième fritte de verre comprenant une fritte d'accrochage pour l'emploi sur fonte de fer.

2. Composition selon la revendication 1, dans laquelle ladite troisième fritte de verre comprend une fritte d'accrochage comprenant de 45 % à 54 % en poids de SiO₂, de 12 % à 16 % en poids de B₂O₃, de 9 % à 13 % en poids de Na₂O, de 2 % à 6 % en poids de K₂O, de 2 % à 5 % en poids de CaO, de 2 % à 5 % en poids de Ti_{O2}, de 1 % à 4 % en poids de BaO, de 1 % à 4 % en poids de Fe₂O₃, de 1 % à 3 % en poids de CoO, de 0,5 % à 3 % en poids de NiO, de 0 % à 5 % en poids de MnO₂,de 0 % à 4 % en poids de Li₂O et de 0 % à 3 % en poids de Al₂O₃.

3. Composition selon la revendication 1, comprenant en outre de 0 % à 5 % en poids de pigments inorganiques.

4. Composition selon la revendication 3, dans laquelle lesdits pigments inorganiques comprennent un ou plusieurs pigments choisis dans le groupe comprenant Cr₂O₃/ CoO, Fe₂O₃, MnO₂ et NiO.

5. Composition selon la revendication 1, dans laquelle ladite première fritte de verre comprend en outre de 0 % à 1 % en poids de Al₂O₃, de 0 % à 1 % en poids de CeO₂, de 0 % à 1 % en poids de CuO, de 0 % à 1 % en poids de MnO₂, de 0 % à 1 % en poids de SrO, de 0 % à 1 % en poids de ZnO et de 0 % à 1 % en poids de ZrO₂ et ladite seconde fritte de verre comprend en outre de 0 % à 1 % en poids de BaO, de 0 % à 1 % en poids de CeO₂, de 0 % à 1 % en poids de CuO, de 0 % à 1 % en poids de Fe₂O₃, de 0 % à 1 % en poids de MnO₂, de 0 % à 1 % en poids de MoO₃, de 0 % à 1 % en poids de NiO, de 0 % à 1 % en poids de Sb₂O₃, de 0 % à 1 % en poids de SrO et de 0 % à 1 % en poids de ZnO.

6. Composition selon la revendication 2, dans laquelle ladite troisième fritte de verre comprend en outre de 0 % à 1 % en poids de CeO₂, de 0 % à 1 % en poids de CuO, de 0 % à 1 % en poids de MoO₃, de 0 % à 1 % en poids de Sb₂O₃, de 0 % à 1 % en poids de SrO, de 0 % à 1 % en poids de ZnO et de 0 % à 1 % en poids de ZrO₂.

7. Composition selon la revendication 1, dans laquelle une fois qu'elle a été appliquée sur une surface en fonte de fer par électrospray à sec et passée au feu durant 4 à 10 minutes à une température variant entre 780°C et 820°C forme une couche d'émail possédant un poli spéculaire de 4 à 8 tel que mesuré selon la norme ASTM D523-89 (1994)e1 sous un angle de brillancemètre de 85°, une résistance aux chocs thermiques excédant environ 425°C telle que mesurée selon la norme ASTM C385-58(1998) et une valeur de résistance aux acides de A à AA telle que mesurée selon la norme ASTM C-282-99.
